Europäisches Patentamt

(19) European Patent Office

Office européen des brevets

(11) **EP 0 872 565 A1**

(12) **EUROPEAN PATENT APPLICATION**

(43) Date of publication:
**21.10.1998 Bulletin 1998/43**

(21) Application number: **98106836.4**

(22) Date of filing: **15.04.1998**

(51) Int. Cl.⁶: $C22C\ 9/06$, $C22C\ 19/03$, $C22C\ 30/00$, $F16D\ 23/04$, $F16D\ 69/02$

(84) Designated Contracting States:
**AT BE CH CY DE DK ES FI FR GB GR IE IT LI LU MC NL PT SE**
Designated Extension States:
**AL LT LV MK RO SI**

(30) Priority: **16.04.1997 JP 98929/97**

(71) Applicant:
**TOYOTA JIDOSHA KABUSHIKI KAISHA Aichi-ken 471-8571 (JP)**

(72) Inventors:
• **Sugiyama, Masaki**
  **Toyota-shi, Aichi-ken, 471-8571 (JP)**

• **Harada, Hiroshi**
  **Toyota-shi, Aichi-ken, 471-8571 (JP)**
• **Takahashi, Kazuhiko**
  **Toyota-shi, Aichi-ken, 471-8571 (JP)**
• **Miyajima, Kazuhiro**
  **Toyota-shi, Aichi-ken, 471-8571 (JP)**
• **Fuwa, Yoshio**
  **Toyota-shi, Aichi-ken, 471-8571 (JP)**

(74) Representative:
**Winter, Brandl, Fürniss, Hübner, Röss, Kaiser, Polte, Kindermann Partnerschaft Patent- und Rechtsanwaltskanzlei Alois-Steinecker-Strasse 22 85354 Freising (DE)**

(54) **Cu-based material of good corrosion resistance**

(57) A Cu-based material of good corrosion resistance is used in the presence of sulfur, and includes a Cu-Ni-based alloy. The Cu-Ni-based alloy includes Ni in an amount of from 10 to 70% by weight, a readily oxidizable element, and the balance of Cu and inevitable impurities. The readily oxidizable element is likely to react with oxygen to produce oxides. The resulting oxides make it possible to inhibit the sulfur from reacting with the Cu-Ni-based alloy to produce sulfides (e.g., CuS, etc.). The readily oxidizable element can be at least one element selected from the group consisting of Zn and Mn. The oxides of the readily oxidizable element is formed on the surface of the Cu-based material, and interferes with the reactions of the copper, involved in the Cu-Ni-based alloy, and the sulfur. Thus, the oxides can inhibit the sulfides from being produced, and can keep the Cu-based material from being corroded by the sulfides.

FIG. 1

EP 0 872 565 A1

**Description**

BACKGROUND OF THE INVENTION

Field of the Invention

The present invention relates to a Cu-based material of good corrosion resistance. More particularly, the present invention relates to a Cu-based material which is used in the presence of sulfur, which comprises a Cu-Ni-based alloy including Ni in a predetermined amount, and whose resistance to sulfuration corrosion is improved. A Cu-based material of good corrosion resistance according to the present invention can be satisfactorily applied to a synchronizer ring which is utilized for an automotive synchronizing apparatus, or a brake or clutch which is utilized for a railroad vehicle, an aircraft, and the like. The synchronizer ring, brake, clutch, or the like, is used under severe conditions.

Description of the Related Art

A variety of Cu-based friction materials have been known conventionally, which are employed to make a brake or clutch utilized for a railroad vehicle, an aircraft, and the like. For example, the Cu-based friction materials are a Cu-Sn-based bronze, a Cu-Al-based bronze, etc., or a Cu-Zn-based high-tensile brass, etc. The Cu-based friction materials are usually made by sintering a Cu-based alloy powder.

Moreover, as can be seen in Japanese Unexamined Patent Publication (KOKAI) No. 60-241,527, an engineering technique has been gown conventionally, in which a Cu-Zn-based high-tensile brass is applied to make a synchronizer ring constituting an automotive synchronizing apparatus. Alternatively, there has been an engineering technique to make such a synchronizer ring from a Cu-based friction material, which is made from a Cu-Al-based aluminum brass by casting or forging. The term, "automotive synchronizing apparatus", herein means an apparatus that reduces the difference between the rotary speeds of engaging clutches in order to avoid the violent engagements of the clutches when a driver switches the shift positions of a transmission.

Friction members, such as the aforementioned synchronizer ring, are used under extreme pressures, in which they roll or slide while they are subjected to high pressures. Accordingly, lubricants are supplied onto the friction surfaces of the friction members in order to inhibit the friction members from being subjected to abrasion, such as pitching, and the like, on their friction surfaces. The lubricants are usually admixed with extreme pressure agents, which contain sulfur and phosphorous components.

However, a series of researches and developments conducted by the inventors of the present invention revealed that, when a lubricant was admixed with an extreme pressure agent, containing a sulfur component and when it was supplied onto the friction surface of a friction member comprising a Cu-based alloy, the friction surface of the friction member might be subjected to the sulfuration corrosion caused by sulfides. For instance, depending on the types of the compositions included in the Cu-based alloy and depending on the contents thereof, the sulfur (S) component included in the extreme pressure agent reacted with the copper (Cu) component of the Cu-based alloy to produce sulfides (e.g., CuS, etc.). Thus, the friction surface of the friction member was subjected to the sulfuration corrosion. The researches and developments conducted by the inventors of the present invention further revealed that the sulfuration corrosion was a crucial problem especially in the Cu-based friction members, which comprised Cu-Ni-based alloys or Cu-Sn-based alloys.

SUMMARY OF THE INVENTION

The present invention has been developed in view of the aforementioned circumstances. It is therefore an object of the present invention to improve the sulfuration-corrosion resistance of a Cu-based material, which is used in the presence of sulfur, and which comprises a Cu-Ni-based alloy being likely to suffer from the problem of the sulfuration corrosion.

A Cu-based material of good corrosion resistance according to the present invention is used in the presence of sulfur, and comprises a Cu-Ni-based alloy, wherein:

the Cu-Ni-based alloy includes:

Ni in an amount of from 10 to 70% by weight;
a readily oxidizable element being likely to react with oxygen to produce oxides, whereby the resulting oxides make it possible to inhibit the sulfur from reacting with the Cu-Ni-based alloy to produce sulfides; and
the balance of Cu and inevitable impurities.

In accordance with a further aspect of the present invention, the readily oxidizable element of the present Cu-based material can be at least one member selected from the group consisting of Zn and Mn.

The present Cu-based material of good corrosion resistance is used in the presence of sulfur, particularly in the presence of a lubricant containing sulfur. For example, the lubricant containing sulfur can be a lubricant, such as a gear oil, and the like, to which an extreme pressure agent is added. The extreme pressure agent includes sulfur and phosphorous components in order to inhibit the abrasion, such as the pitching, and the like, of Cu-based materials on their friction surfaces.

The present Cu-based material of good corrosion resistance comprises a Cu-Ni-based alloy. When a conventional Cu-based friction member comprises a Cu-Ni-based alloy, and when it is used in the presence of sulfur, the sulfur (S) reacts with copper (Cu), and the like, included in the Cu-Ni-based alloy to produce sulfides (e.g., CuS, etc.). The thus produced sulfides are peeled off from the friction surface of the conventional Cu-based friction member. The sulfides are produced and peeled off repeatedly. Accordingly, there arises the problem of the corrosion wear which is caused by the sulfuration corrosion. In order to avoid the problem, the present Cu-based material comprises a Cu-Ni-based alloy in which a readily oxidizable element is included. The readily oxidizable element reacts with oxygen to produce oxides. Accordingly, the present Cu-based material is provided with the oxides on the surface, oxides which are made from the readily oxidizable element. The oxides formed on the surface of the present Cu-based material interfere with the reactions of the sulfur, copper, and the like. Consequently, the oxides can inhibit the sulfides from being produced. The oxygen in the air and the readily oxidizable element are combined to form the oxides, which are present on the surface of the present Cu-based material, during the manufacturing of the present Cu-based material. Even when the present Cu-based material is worn off to lose the layer of the oxides formed on the surface during the service, the oxygen in the air reacts with the readily oxidizable element, included in the present Cu-based material, also during the service. As a result, the oxides are formed consistently at any time on the surface of the present Cu-based material. Note that the oxides are formed in the superficial layer of the present Cu-based material, superficial layer which extends down from the top surface of the present Cu-based material by a depth of from about 4 to 10 nm. The depth of the oxides layer can preferably be from 1 to 1,000 nm. Thus, on the surface of the present Cu-based material, the oxides keep the sulfur from reacting with the copper, and the like, included in a Cu-Ni-based alloy. Therefore, it is possible to inhibit the present Cu-based material from being corroded by the sulfides, though the present Cu-based material includes a Cu-Ni-based alloy.

When a Cu-based material, comprising a Cu-Ni-based alloy, is used in the presence of sulfur, there arises the problem of the sulfuration corrosion. Hence, the present invention aims at improving the sulfuration-corrosion resistance of a Cu-Ni-based alloy. More specifically, the present invention is also directed to heightening the melting point of a Cu-Ni-based alloy. The melting point of a Cu-Ni-based alloy can be increased, for example, by alloying Ni.

Specifically, due to the following reasons, the melting point of a Cu-based alloy is raised by alloying Ni. For instance, when a Cu-Ni-based alloy powder includes Ni in a predetermined amount or more, the Cu-Ni-based alloy powder dose not melt at the sintering temperature of an Fe-based powder (e.g., from 1,100 to 1,300 °C approximately). Consequently, the Cu-Ni-based alloy powder and the Fe-based powder can be sintered simultaneously. As a result, an Fe-based substrate and a Cu-based material including a Cu-Ni-based alloy, for example, can be composited by molding and sintering them simultaneously. The Cu-based material herein can be exemplified by a Cu-based friction member.

When the Fe-based substrate and the Cu-based material are thus composited by molding and sintering them simultaneously, they produce a bonding surface therebetween, in bonding surface which the particulates of the Fe-based substrate and Cu-based material are entangled with each other satisfactorily. Thus, the bonding strength between the Fe-based substrate and the Cu-based material can be fully enhanced. As a result, the present Cu-based material of good corrosion resistance can provide a composite whose bonding strength is upgraded with respect to an Fe-based substrate. In particular, when the present Cu-based material is composited with an Fe-based substrate to provide a friction member, the Fe-based substrate can securely produce required strength for a friction member, and at the same time the present Cu-based material can securely produce required friction characteristic for a friction material. Therefore, it is possible to make a composite friction member which can sufficiently satisfy both of the strength and friction characteristic at the same time.

In a Cu-Ni-based alloy, the more it contains Ni, the higher melting point it exhibits. Accordingly, in order to allow the Cu-Ni-based alloy, employed in the present Cu-based material of good corrosion resistance, to be sintered simultaneously with an Fe-based substrate, the Cu-Ni-based alloy can preferably contain Ni in a minimum amount of 10% by weight or more, further preferably 15% by weight or more, and furthermore preferably 30% by weight or more. When the content of Ni included in the Cu-Ni-based alloy is less than 10% by weight, the resulting Cu-Ni-based alloy is melted at the sintering temperature of an Fe-based alloy powder. Accordingly, such a Cu-Ni-based alloy powder and an Fe-based alloy powder cannot be sintered simultaneously. On the other hand, when the content of Ni included in the Cu-Ni-based alloy is too much, there arises the following fear. For instance, when such a Cu-based material of abundant Ni content is used as a friction material, the resulting friction member may not securely exhibit the friction characteristics, such as the seizure resistance, and the like, required for a friction member. Hence, in view of applying the present Cu-based material to a friction member, and in view of securely giving the required friction characteristics, such as the seizure resistance, and the like, to the present Cu-based material for this application, the Cu-Ni-based alloy can preferably contain Ni in a maximum amount of 70% by weight or less, further preferably 45% by weight or less, and furthermore preferably 30% by weight or less.

The thus arranged Cu-Ni-based alloy constitutes the present Cu-based material of good corrosion resistance, and includes the readily oxidizable element. The readily oxidizable element, which is involved in the Cu-Ni-based alloy, is not limited in particular as far as it can combine with oxygen to produce oxides in the production of the present Cu-based material or during the service thereof. For example, it is possible, however, to name the following elements as the readily oxidizable element: Zn, Mn, Al, Si, Cr, Mg, Ti, V, B, and the like. Among these elements, it is preferable to select at least one element from the group consisting of Zn and Mn when taking their readiness to pulverizing, their strength after sintering, etc., into account. Concerning how many types of the readily oxidizable element are included in the Cu-Ni-based alloy, one or more types of the readily oxidizable element can be included in the Cu-Ni-based alloy.

The composition ratio of the readily oxidizable element to be included in the Cu-Ni-based alloy can preferably fall in a predetermined range as hereinafter described. When the composition ratio falls in such a predetermined range, the readily oxidizable element can adequately react with the oxygen, derived from the production of the present Cu-based material of good corrosion resistance and the service thereof, to produce oxides. Consequently, the resulting oxides can satisfactorily inhibit the sulfur from reacting with the components, such as Cu, etc., contained in the Cu-Ni-based alloy to produce the sulfides, such as CuS, etc. Suppose the content of the readily oxidizable element, included in the Cu-Ni-based alloy, be a certain atomic %, and the composition ratio of the readily oxidizable element (hereinafter simply referred to as a composition ratio "P") be taken with respect to the sum of the atomic % contents of the readily oxidizable element and one of the components of the Cu-Ni-based alloy (e.g., Cu), the minimum composition ratio "P" can preferably be 30% or more, further preferably 40% or more, and furthermore preferably 45% or more.

For instance, let the contents of one of the components of the Cu-Ni-based alloy and the readily oxidizable element be the following values:

$W_{Cu}$ (expressed in % by weight), the content of Cu contained in the Cu-Ni-based alloy;
$W_x$ (expressed in % by weight), the content of the readily oxidizable element contained in the Cu-Ni-based alloy;
$A_{Cu}$, the quotient obtained by dividing $W_{Cu}$ by the atomic weight of Cu; and
$A_x$, the quotient obtained by dividing $W_x$ by the atomic weight of the readily oxidizable element;

the composition ratio "P" can be calculated by equation (1) below. Accordingly, as mentioned above, the minimum composition ratio "P" of the readily oxidizable element with respect to the sum of the atomic % contents of the readily oxidizable element and Cu can preferably be 30% or more.

$$\text{"P" (\%)} = \{A_x/(A_{Cu}+A_x)\} \times 100 \tag{1}$$

Note that, when the minimum composition ratio "P" is less than 30%, there arises a fear of causing the sulfuration corrosion. Namely, if such is the case, it is difficult for the oxides, which are formed on the surface of the resulting Cu-based material, to adequately inhibit the sulfur from reacting with Cu to produce the sulfides, because the readily oxidizable element is included in the Cu-Ni-based alloy too less with respect to Cu included therein.

Concerning the maximum composition ratio "P" of the readily oxidizable element with respect to the sum of the atomic % contents of the readily oxidizable element and one of the components of the Cu-Ni-based alloy (e.g., Cu), it is determined while taking the contents of the other components contained in the Cu-Ni-based alloy into consideration. Namely, the maximum composition ratio "P" is appropriately adjusted so that the resulting present Cu-based material of good corrosion resistance can securely produce the friction characteristics, strengths, and the like. Note that the maximum composition ratio "P" can preferably be 60% or less, further preferably 50% or less, and furthermore preferably 40% or less.

Moreover, the Cu-Ni alloy, constituting the present Cu-based material of good corrosion resistance, can further include hard particles, an internal lubricant, and so on, in an appropriate amount therein in addition to the impurities, which are present therein inevitably. The hard particles contribute to improving the wear resistance of the present Cu-based material. The hard particles can be ceramic, etc., for example. The internal lubricant contributes to enhancing the lubricating property of the present Cu-based material. The internal lubricant can be graphite, etc., for example.

The thus arranged present Cu-based material of good corrosion resistance can be produced in the following manner: molding a Cu-Ni-based alloy powder of the above-described composition into a predetermined configuration; and sintering the resulting molded substance. Note that the molding and sintering conditions are not specified or limited herein in particular.

As described so far, the present Cu-based material of good corrosion resistance is formed with the layer of the oxides on the surface. The layer works as a protective layer against the sulfuration corrosion. Accordingly, when the present Cu-based material is used in the presence of the lubricants containing sulfur, the layer can effectively inhibit the present Cu-based material from being corroded by the sulfides. Moreover, the present Cu-based material includes Ni in a predetermined amount so that it can be sintered simultaneously with Fe-based substrates. Consequently, it is possible to provide composites in which Cu-based materials (e.g., Cu-based friction members) and Fe-based substrates are bonded with sufficient strength.

As a result, when the present Cu-based material of good corrosion resistance is applied to friction members, it is possible to provide synchronizer rings which include Fe-based substrates. The Fe-based substrates can securely provide full strengths required for the resulting synchronizer rings, and the Cu-based friction members can certainly effect satisfactory friction characteristics and corrosion resistance therefor.

BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:

Fig. 1 is a diagram for illustrating the atomic concentrations in the superficial portion of a Cu-Ni-based alloy specimen after a sulfuration-corrosion test, Cu-Ni-based alloy specimen which included Zn as the readily oxidizable element;

Fig. 2 is a diagram for illustrating the atomic concentrations in the superficial portion of a Cu-Ni-based alloy specimen after a sulfuration-corrosion test, Cu-Ni-based alloy specimen which included Mn as the readily oxidizable element;

Fig. 3 is a diagram for illustrating the relationships between the composition ratio "P" of the readily oxidizable element with respect to the sum of the atomic % contents of the readily oxidizable element and Cu, relationships which were exhibited by a Cu-Zn-based alloy and a Cu-Mn-based alloy;

Fig. 4 is a diagram for illustrating the atomic concentrations in the superficial portion of a Cu-Ni-based alloy specimen after a sulfuration-corrosion test, Cu-Ni-based alloy specimen which was free from the readily oxidizable element;

Fig. 5 is a phase diagram of a Cu-Ni-based alloy;

Fig. 6 is a diagram for illustrating the relationship between the Ni content of a Cu-Ni-based alloy and the seizure resistance thereof;

Fig. 7 is a ternary composition diagram of a Cu-Ni-based alloy which included Zn as the readily oxidizable element, and depicts the composition range where the Cu-Ni-based alloy could be sintered simultaneously with an Fe-based substrate, and where the Cu-Ni-based alloy could be inhibited from the sulfuration corrosion effectively; and

Fig. 8 is a ternary composition diagram of a Cu-Ni-based alloy which included Mn as the readily oxidizable element, and depicts the composition range where the Cu-Ni-based alloy could be sintered simultaneously with an Fe-based substrate, and where the Cu-Ni-based alloy could be inhibited from the sulfuration corrosion effectively.

DETAILED DESCRIPTION OF THE PREFERRED EMBODIMENTS

Having generally described the present invention, a further understanding can be obtained by reference to the specific preferred embodiments which are provided herein for purposes of illustration only and are not intended to limit the scope of the appended claims.

First Preferred Embodiment

In a First Preferred Embodiment of the present invention, Zn was utilized as the readily oxidizable element. The Cu-Ni-Zn-based alloy powders whose compositions are shown in Table 2 were prepared by a water atomizing process, respectively. The resulting Cu-Ni-Zn-based alloy powders had an average particle diameter of 75 μm or less, respectively. Note that, in Table 2, the composition ratio "P" (%) means the aforementioned composition ratio "P" of the readily oxidizable element (e.g., Zn) with respect to the sum of the atomic % contents of the readily oxidizable element (e.g., Zn) and Cu, and was calculated according to above equation (1). This note is applicable to Tables 3 and 4 below similarly. The atomic weights of the respective elements are summarized in Table 1 below.

TABLE 1

| Atomic Weight | | | |
|---|---|---|---|
| Cu | Ni | Zn | Mn |
| 63.54 | 58.7 | 65.3 | 54.94 |

The thus prepared Cu-Ni-Zn-based alloy powders were molded by an ordinary molding process into a plate-shaped molded substances of 30 mm x 30 mm x 5 mm in size. Then, the resulting molded substances were sintered in an nitrogen gas atmosphere at 1,120 °C for 30 minutes to prepare test specimens. Note that the molded substances were confirmed to be free from melting during the sintering. Also note that, after the sintering, the surface of the resulting test specimens were finished to a mirror surface by a test-specimen grinder, washed and dried.

(TABLE 2)

TABLE 2

| No. of Test Specimen | Alloy | Composition (Weight %) | | | | Composition (Atomic %) | | | | Composition Ratio "P" (%) | Rating |
|---|---|---|---|---|---|---|---|---|---|---|---|
| | | Cu | Ni | Zn | Mn | Cu | Ni | Zn | Mn | | |
| 1 | Cu-30Ni-3Zn | 67.00 | 30.00 | 3.00 | none | 65.08 | 31.55 | 2.84 | none | 4.18 | Bad |
| 2 | Cu-50Ni-10Zn | 40.00 | 50.00 | 10.00 | none | 37.85 | 51.21 | 9.21 | none | 19.57 | Bad |
| 3 | Cu-40Ni-20Zn | 40.00 | 40.00 | 20.00 | none | 37.58 | 40.68 | 18.29 | none | 32.73 | Good |
| 4 | Cu-50Ni-20Zn | 30.00 | 50.00 | 20.00 | none | 27.97 | 50.46 | 18.14 | none | 39.35 | Good |

Each of the test specimens were subjected to a sulfuration corrosion test under the following conditions. In the sulfuration corrosion test, a gear oil for a manual transmission was used. The gear oil was produced by Showa Shell Petroleum Co., Ltd., and had a quality grade of "API GL-5 SAE75W-90". An extreme pressure agent was added to the gear oil, and included sulfur and phosphorous components therein. The gear oil with the extreme pressure agent admixed was put in a container made of glass. Each of the test specimens were immersed in the gear oil for a predetermined period of time under the following testing conditions:

Volume of Gear Oil: 1,000 c.c.;
Temp. of Gear Oil: 135 °C; and
Time of Immersion: 24 hours.

After the sulfuration corrosion test, the test specimens were observed visually to inspect the discoloration on the surface. The color of the surface was altered to black by CuS when there arose the sulfuration corrosion. Accordingly, this inspection was intended to check to what extent the sulfuration corrosion occurred by visually observing the discoloration. The results of the inspection were analyzed in accordance with the corrosion testing method for copper plate in petroleum product as per JIS (i.e., Japanese Industrial Standard) K 2513. The degree of the discoloration was evaluated by discoloration indexes 1 through 4. Note that the larger the discoloration index was, the darker the test specimen was discolored. The test specimens evaluated to exhibit discoloration index 1 were regarded as "Good", and the test specimens evaluated to exhibit discoloration indexes 2 or more were regarded as "Bad". The results of the sulfuration corrosion test are recited in Table 2 together with the compositions of the Cu-Ni-Zn-based alloys.

It is apparent from Table 2 that Test Specimen Nos. 3 and 4 included the Cu-Ni-based alloys to which Zn, working as the readily oxidizable element, was added by the predetermined composition ratio "P" or more (i.e., "P" $\geqq$ 30), and that Test Specimen Nos. 3 and 4 could favorably inhibit the sulfuration corrosion from taking place. On the other hand, Test Specimen Nos. 1 and 2 included the Cu-Ni-based alloys to which Zn was added by the lesser composition ratio "P" (i.e., "P" $\leqq$ 20). Consequently, Test Specimen Nos. 1 and 2 could not fully inhibit the sulfuration corrosion from taking place.

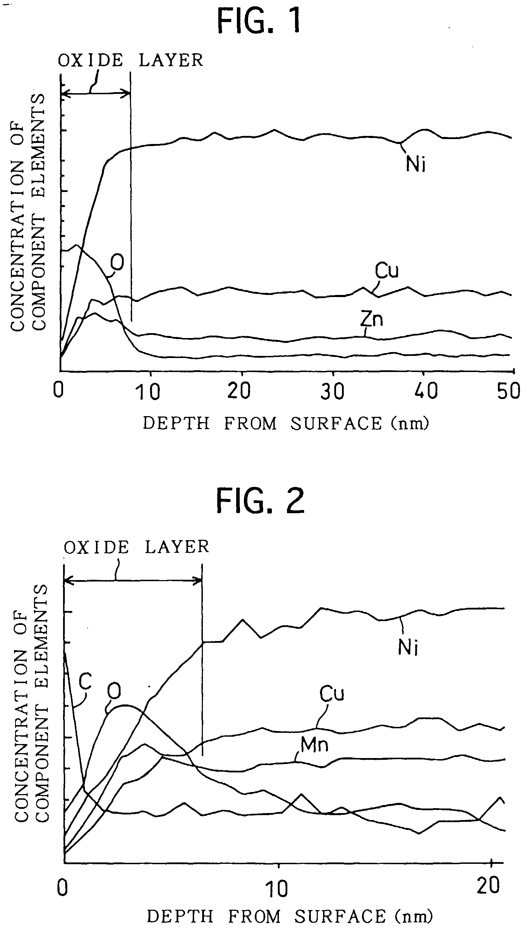

Concerning Test Specimen No. 4, it comprised the Cu-Ni-based alloy to which Zn was added by the composition ratio "P" of 39.35% of Zn with respect to the sum of the atomic % contents of Cu and Zn. After Test Specimen No. 4 was subjected to the sulfuration corrosion test, its surface was examined by using Microauger or by AES (i.e., Auger electron spectroscopy). Specifically, the portion of Test Specimen No. 4 adjacent to the surface was evaluated for the atomic concentrations of the component elements in the depth-wise direction. Fig. 1 illustrates the results of the measurement.

It is appreciated from Fig. 1 that the atomic concentrations of oxygen and Zn were high from the surface down to the depth of about 8 $\mu$m. Accordingly, it is understood that oxides of Zn were formed in this part. On the other hand, the presence of sulfur was little appreciated in the part. Consequently, it is seen that no sulfides were produced in the portion. As a result, it is evident that, when oxides of Zn are formed in the surface of test specimens, the sulfuration corrosion can be inhibited effectively from occurring.

Second Preferred Embodiment

In a Second Preferred Embodiment of the present invention, Mn was utilized as the readily oxidizable element. The Cu-Ni-Mn-based alloy powders whose compositions are shown in Table 3 were prepared by a water atomizing process, respectively. The resulting Cu-Ni-Mn-based alloy powders had an average particle diameter of 75 $\mu$m or less, respectively. The thus prepared Cu-Ni-Mn-based alloy powders were processed into test specimens in the same manner as the First Preferred Embodiment.

Likewise, each of the test specimens were subjected to the sulfuration corrosion test in the identical fashion with the First Preferred Embodiment. The results of the sulfuration corrosion test are recited in Table 3 together with the compositions of the Cu-Ni-Mn-based alloys.

It is apparent from Table 3 that Test Specimen Nos. 7 and 8 included the Cu-Ni-based alloys to which Mn, working as the readily oxidizable element, was added by the predetermined composition ratio "P" or more (i.e., "P" $\geqq$ 30), and that Test Specimen Nos. 7 and 8 could favorably inhibit the sulfuration corrosion from taking place. On the other hand, Test Specimen Nos. 5 and 6 included the Cu-Ni-based alloys to which Mn was added by the lesser composition ratio "P" (i.e., "P" < 30). Consequently, Test Specimen Nos. 5 and 6 could not fully inhibit the sulfuration corrosion from taking place.

(TABLE 3)

TABLE 3

| No. of Test Specimen | Alloy | Composition (Weight %) | | | | Composition (Atomic %) | | | | Composition Ratio "P" (%) | Rating |
|---|---|---|---|---|---|---|---|---|---|---|---|
| | | Cu | Ni | Zn | Mn | Cu | Ni | Zn | Mn | | |
| 5 | Cu-30Ni-3Mn | 67.00 | 30.00 | none | 3.00 | 65.08 | 31.55 | none | 3.37 | 4.92 | Bad |
| 6 | Cu-50Ni-10Mn | 40.00 | 50.00 | none | 10.00 | 37.85 | 51.21 | none | 10.94 | 22.43 | Bad |
| 7 | Cu-40Ni-20Mn | 40.00 | 40.00 | none | 20.00 | 37.58 | 40.68 | none | 21.73 | 36.64 | Good |
| 8 | Cu-60Ni-20Mn | 20.00 | 60.00 | none | 20.00 | 18.51 | 60.09 | none | 21.40 | 53.63 | Good |

Concerning Test Specimen No. 7, it comprised the Cu-Ni-based alloy to which Mn was added by the composition ratio "P" of 36.64% of Mn with respect to the sum of the atomic % contents of Cu and Mn. After Test Specimen No. 7 was subjected to the sulfuration corrosion test, its surface was examined by using Microauger or by AES (i.e., Auger electron spectroscopy). Specifically, the portion of Test Specimen No. 7 adjacent to the surface was evaluated for the atomic concentrations of the component elements in the depth-wise direction. Fig. 2 illustrates the results of the measurement.

It is appreciated from Fig. 2 that the atomic concentrations of oxygen and Mn were high from the surface down to the depth of about 6 $\mu$m. Accordingly, it is understood that oxides of Mn were formed in this part. On the other hand, the presence of sulfur was little appreciated in the part. Consequently, it is seen that no sulfides were produced in the portion. As a result, it is evident that, when oxides of Mn are formed in the surface of test specimens, the sulfuration corrosion can be inhibited effectively from occurring. Note that, in Fig. 2, the carbon content of Test Specimen No. 7 is believed to have derived from the lubricating oil.

Relationship between Content of Readily Oxidizable Element and Sulfuration-Corrosion Inhibiting Effect

Cu-Mn-based alloy powders, Cu-Zn-based alloy powders and Cu-Ni-based alloy powders whose compositions are shown in Table 4 were prepared by a water atomizing process, respectively. The resulting Cu-Mn-based alloy powders, Cu-Zn-based alloy powders and Cu-Ni-based alloy powders had an average particle diameter of 75 $\mu$m or less, respectively. The thus prepared Cu-Mn-based alloy powders, Cu-Zn-based alloy powders and Cu-Ni-based alloy powders were processed into test specimens in the same manner as the First Preferred Embodiment.

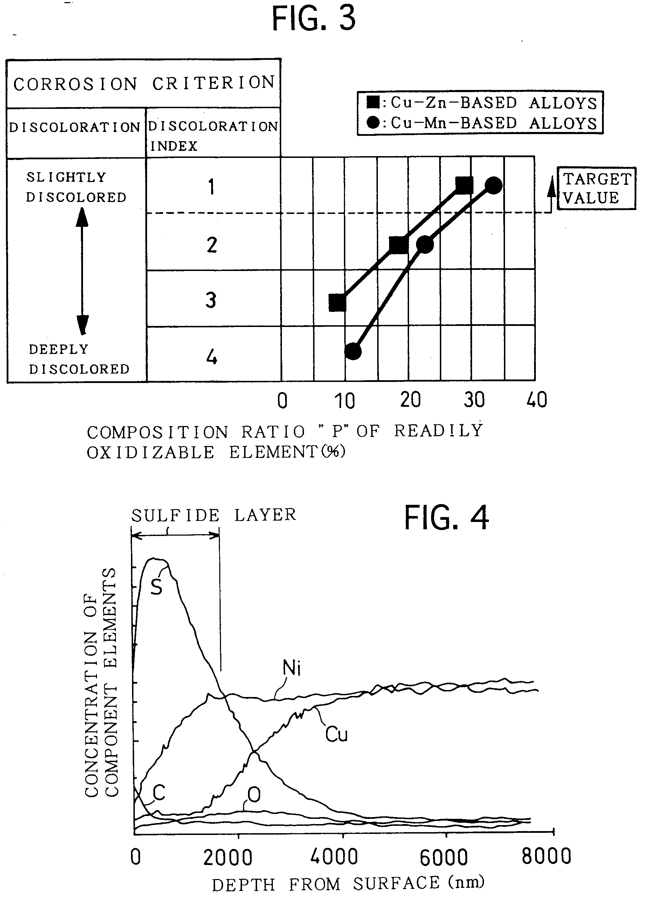

Likewise, each of the test specimens were subjected to the sulfuration corrosion test in the identical fashion with the First Preferred Embodiment. The results of the sulfuration corrosion test are recited in Table 4, and are illustrated in Fig. 3 as well. In Fig. 3, the solid circles (●) specify the evaluation results exhibited by Test Sample Nos. 9 through 11 which employed the Cu-Mn-based alloys, and the solid squares (■) specify the evaluation results exhibited by Test Sample Nos. 12 through 14 which employed the Cu-Zn-based alloys.

It is apparent from Table 4 and Fig. 3 that, when Mn working as the readily oxidizable element was involved in the Cu-based alloys by the composition ratio "P" of 30% or more with respect to the sum of the atomic % contents of Cu and Mn, the resulting Cu-based materials could effectively inhibit the sulfuration corrosion from taking place. It is also apparent from Table 4 and Fig. 3 that, when Zn working as the readily oxidizable element was involved in the Cu-based alloys by the composition ratio "P" of 25% or more with respect to the sum of the atomic % contents of Cu and Zn, the resulting Cu-based materials could effectively inhibit the sulfuration corrosion from taking place.

(TABLE 4)

TABLE 4

| No. of Test Specimen | Alloy | Composition (Weight %) | | | | Composition (Atomic %) | | | | Composition Ratio "P" (%) | Rating |
|---|---|---|---|---|---|---|---|---|---|---|---|
| | | Cu | Ni | Zn | Mn | Cu | Ni | Zn | Mn | | |
| 9 | Cu-10Mn | 90.00 | none | none | 10.00 | 88.61 | none | none | 11.39 | 11.39 | Bad |
| 10 | Cu-20Mn | 80.00 | none | none | 20.00 | 77.57 | none | none | 22.43 | 22.43 | Bad |
| 11 | Cu-30Mn | 70.00 | none | none | 30.00 | 66.86 | none | none | 33.14 | 33.14 | Good |
| 12 | Cu-10Zn | 90.00 | none | 10.00 | none | 90.24 | none | 9.76 | none | 9.76 | Bad |
| 13 | Cu-20Zn | 80.00 | none | 20.00 | none | 80.43 | none | 19.57 | none | 19.57 | Bad |
| 14 | Cu-30Zn | 70.00 | none | 30.00 | none | 70.57 | none | 29.43 | none | 29.43 | Good |
| 15 | Cu-40Zn | 60.00 | none | 40.00 | none | 60.65 | none | 39.35 | none | 39.35 | Good |
| 16 | Cu-30Ni | 70.00 | 30.00 | none | none | 68.31 | 31.69 | none | none | none | Bad |
| 17 | Cu-50Ni | 50.00 | 50.00 | none | none | 48.02 | 51.98 | none | none | none | Bad |
| 18 | Cu-70Ni | 30.00 | 70.00 | none | none | 28.36 | 71.64 | none | none | none | Bad |

Test Specimen No. 16 was made from the Cu-30Ni-based alloy powder which was free from the readily oxidizable element. After Test Specimen No. 16 was subjected to the sulfuration corrosion test, its surface was examined by using Microauger or by AES (i.e., Auger electron spectroscopy). Specifically, the portion of Test Specimen No. 16 adjacent to the surface was evaluated for the atomic concentrations of the component elements in the depth-wise direction. Fig. 4 illustrates the results of the measurement.

It is appreciated from Fig. 4 that the layer of sulfides was formed in the surface of test specimen No. 16 (i.e., the Cu-30 Ni-based alloy), and the sulfuration corrosion occurred therein. Note that, in Fig. 4, the carbon content of Test Specimen No. 16 is believed to have derived from the lubricating oil.

Relationship between Content of Ni and Melting Point of Cu-Ni-based Alloy

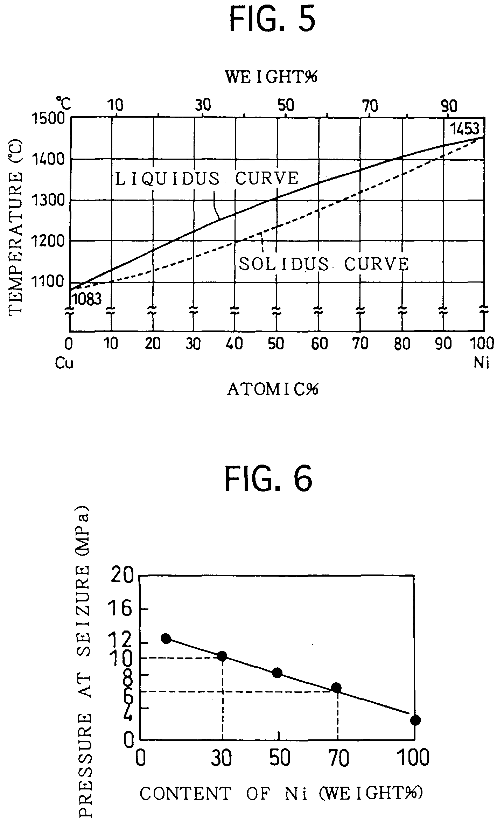

Fig. 5 is a phase diagram of a Cu-Ni-based alloy. As illustrated in Fig. 5, the larger the content of Ni is, the higher the melting point of the Cu-Ni-based alloy is. In order to allow a Cu-Ni-based alloy powder to sinter simultaneously with an Fe-based powder, the Cu-Ni-based alloy hardly melts at the sintering temperature of the Fe-based powder. For instance, the melting point of the Cu-Ni-based alloy can preferably be the sintering temperature of the Fe-based alloy powder or higher, or the melting point can fall in a range of from 1,100 to 1,300 °C approximately, further preferably from 1,120 to 1,250 °C approximately. Accordingly, the content of Ni can preferably be 10% by weight or more, further preferably be 15% by weight or more, furthermore preferably be 30% or more.

Relationship between Content of Ni and Seizure Resistance of Cu-Ni-based Alloy

A plurality of Cu-Ni-based alloy powders whose contents of Ni were varied diversely were processed into test specimens in the same manner as the First Preferred Embodiment. Then, the resulting test specimens were subjected to a seizure resistance test, which employed a ring-on-disk type friction-and-wear testing apparatus, under the following conditions:

Mating Member: Heat-treated SCM 20 (as per JIS);
Sliding Speed: 7.1 m/second;
Load: Accumulated by an increment of 1 MPa for every 2 minutes; and
Lubricant: SAE75W-90 (trademark) produced by Esso Co., Ltd.

Fig. 6 illustrates the results of the seizure resistance test.
The following can be seen from Fig. 6:

The larger the content of Ni was, the more the seizure resistance of the test specimen, made from the Cu-Ni-based alloy powders, deteriorated. When the test specimen contained Ni in an amount of 30% by weight, the pressure at seizure was found to be 10 MPa. When the test specimen contained Ni in an amount of 70% by weight, the pressure at seizure was found to be 6 MPa. In view of the fact, it is assumed that the test specimen is required to exhibit the seizure resistance (i.e., the pressure at seizure) of 6 MPa or more when the Cu-Ni-based alloy powders are applied to make the sliding member of the synchronizer rings, for instance. Hence, when applying the present Cu-based material of good corrosion resistance comprising the Cu-Ni-based alloy to the sliding member of the synchronizer rings, the Cu-Ni-based alloy can preferably contain Ni in an amount of 70% by weight or less, further preferably 45% by weight or less, and furthermore preferably 30% by weight or less in view of securely providing the present Cu-based material with the seizure resistance required for the friction member.

Relationship between Composition of Cu-Ni-based Alloy, Melting Point of Cu-Ni-based Alloy and Sulfuration-Corrosion Inhibiting Effect

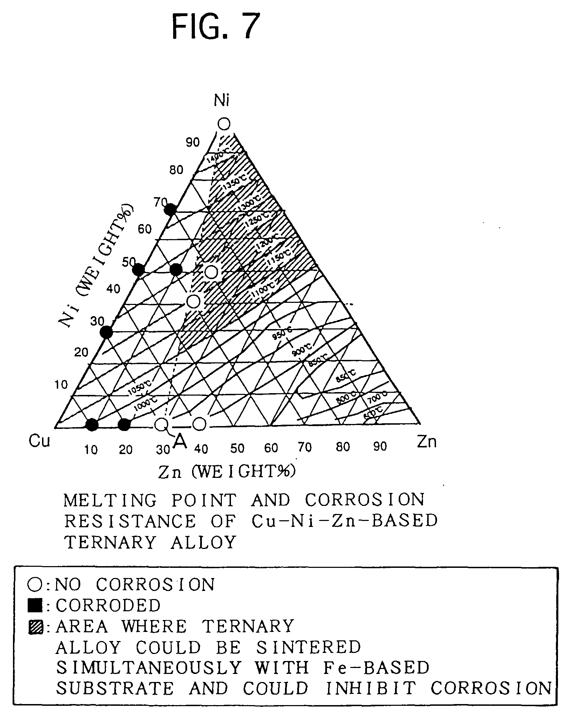

Fig. 7 is a ternary composition diagram of a Cu-Ni-based alloy which included Zn as the readily oxidizable element. In the drawing, the composition range is depicted where the Cu-Ni-based alloy could be sintered simultaneously with an Fe-based substrate, and where the Cu-Ni-based alloy could effectively inhibit the sulfuration corrosion from taking place.

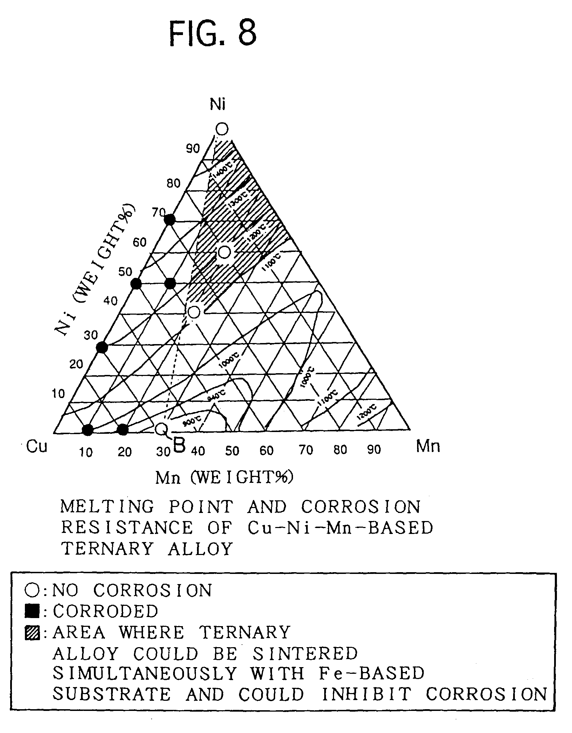

Likewise, Fig. 8 is a ternary composition diagram of a Cu-Ni-based alloy which included Mn as the readily oxidizable element. In the drawing, the composition range is depicted where the Cu-Ni-based alloy could be sintered simultaneously with an Fe-based substrate, and where the Cu-Ni-based alloy could effectively inhibit the sulfuration corrosion from taking place.

In Fig. 7, there is a line where the Cu-Ni-based alloy exhibited the melting point of 1,100 °C. This line constitutes a first boundary. On the upper left side above the first boundary, there is a region where the Cu-Ni-based alloy exhibited the melting point of 1,100 °C or more so that it could be sintered simultaneously with an Fe-based powder. Moreover, in Fig. 7, there is the point "A" (i.e., Cu-30Zn) which lies in the Cu-Zn bottom line connecting the apexes of Cu (100% by weight of Cu) and Zn (100% by weight of Zn), and there is another line which connects the point "A" and the apex of Ni (100% by weight of Ni). The another line constitutes a second boundary. On the right side of the second boundary, there is a region where the Cu-Ni-based alloy could effectively inhibit the sulfuration corrosion from occurring when it included the readily oxidizable element (i.e., Zn) in a predetermined amount or more.

Similarly, in Fig. 8, there is a line where the Cu-Ni-based alloy exhibited the melting point of 1,100 °C. This line constitutes a first boundary. On the upper left side above the first boundary, there is a region where the Cu-Ni-based alloy exhibited the melting point of 1,100 °C or more so that it could be sintered simultaneously with an Fe-based powder. Moreover, in Fig. 8, there is the point "B" (i.e., Cu-30Mn) which lies in the Cu-Mn bottom line connecting the apexes of Cu (100% by weight of Cu) and Mn (100% by weight of Mn), and there is another line which connects the point "B" and the apex of Ni (100% by weight of Ni). The another line constitutes a second boundary. On the right side of the second boundary, there is a region where the Cu-Ni-based alloy could effectively inhibit the sulfuration corrosion from occurring when it included the readily oxidizable element (i.e., Mn) in a predetermined amount or more.

Thus, in Figs. 7 and 8, the hatched area specifies the preferable composition range for the Cu-Ni-based alloy. In the hatched area, the Cu-Ni-based alloy exhibited the melting point of 1,100 °C or more so that it could be sintered simultaneously with an Fe-based substrate. Moreover, in the hatched area, the Cu-Ni-based alloy could effectively inhibit the sulfuration corrosion from arising when it included the readily oxidizable element (i.e., Zn or Mn) in a predetermined amount or more.

Taking the friction characteristic (e.g., the seizure resistance) required for a Cu-based friction member into consideration, it is not preferred, however, that the Cu-Ni-based alloy contains Ni in an excessively large amount therein. Accordingly, considering the melting point, the sulfuration-corrosion inhibiting effect and the seizure resistance of the Cu-Ni-based alloy in total, the composition of the Cu-Ni-based alloy, from which the present Cu-based material of good corrosion resistance is made, can preferably fall in the following ranges:

when the present Cu-based material employs Zn as the readily oxidizable element; the Cu-Ni-based alloy can preferably include:

Ni in an amount of from 10 to 70% by weight, further preferably from 25 to 60% by weight, furthermore preferably from 40 to 60% by weight;
Zn in an amount of from 10 to 50% by weight, further preferably from 15 to 40% by weight, furthermore preferably from 15 to 30% by weight; and
the balance of Cu and inevitable impurities; and

when the present Cu-based material employs Mn as the readily oxidizable element; the Cu-Ni-based alloy can preferably include:

Ni in an amount of from 10 to 70% by weight, further preferably from 34 to 65% by weight, furthermore preferably from 40 to 60% by weight;
Mn in an amount of from 10 to 40% by weight, further preferably from 10 to 30% by weight, furthermore preferably from 15 to 25% by weight; and
the balance of Cu and inevitable impurities.

When the present Cu-based material of good corrosion resistance comprises the Cu-Ni-based alloy whose composition falls in the ranges described above, the present Cu-based material can be composited with an Fe-based substrate by molding and sintering them simultaneously. As a result, it is possible to provide a novel composite friction member in which the present Cu-based material and the Fe-based substrate are bonded with a fully improved bonding strength, and in which the present Cu-based material exhibits high seizure resistance as well as good corrosion resistance against the sulfuration corrosion.

Having now fully described the present invention, it will be apparent to one of ordinary skill in the art that many changes and modifications can be made thereto without departing from the spirit or scope of the present invention as set forth herein including the appended claims.

## Claims

1. A Cu-based material of good corrosion resistance used in the presence of sulfur, and comprising a Cu-Ni-based alloy, wherein:

the Cu-Ni-based alloy includes:

Ni in an amount of from 10 to 70% by weight;

a readily oxidizable element being likely to react with oxygen to produce oxides, whereby the resulting oxides make it possible to inhibit the sulfur from reacting with the Cu-Ni-based alloy to produce sulfides; and

the balance of Cu and inevitable impurities.

2. The Cu-based material according to Claim 1, wherein:

said readily oxidizable element is at least one member selected from the group consisting of Zn and Mn.

3. The Cu-based material according to Claim 2, wherein:

said readily oxidizable element is Zn, and is included in said Cu-Ni-based alloy in an amount of from 10 to 50% by weight.

4. The Cu-based material according to Claim 2, wherein:

said readily oxidizable element is Mn, and is included in said Cu-Ni-based alloy in an amount of from 10 to 40% by weight.

5. The Cu-based material according to Claim 1, wherein:

said Cu-Ni-based alloy includes said readily oxidizable element by a composition ratio of from 30% or more to 60% or less, the composition ratio being a content of said readily oxidizable element expressed by an atomic % with respect to the sum of the content of said readily oxidizable element and a content of said Cu expressed by an atomic %.

6. The Cu-based material according to Claim 1 having a layer of oxides which extends from a surface of said Cu-based material by a depth of from 4 to 10 nm.

7. The Cu-based material according to Claim 1, wherein:

said Cu-Ni-based alloy hardly melts in a temperature range of from 1,100 to 1,300 °C.

8. The Cu-based material according to Claim 1, wherein:

said Cu-based material exhibits a pressure of 6 MPa at least at seizure when it is tested on a ring-on-disk type testing apparatus.

9. The Cu-based material according to Claim 1, wherein:

said readily oxidizable element is at least one member selected from the group consisting of Zn, Mn, Al, Si, Cr, Mg, Ti, V and B.

10. The Cu-based material according to Claim 1, wherein:

said Cu-Ni-based alloy includes said readily oxidizable element in an amount of from 10 to 50% by weight.

11. A friction material made by composting the Cu-based material according to Claim 1 and an Fe-based substrate.

12. A synchronizer ring for an automotive synchronizing apparatus, the synchronizer ring made from the Cu-based material according to Claim 1.

# FIG. 1

# FIG. 2

EP 0 872 565 A1

# FIG. 3

| CORROSION CRITERION | | |
|---|---|
| DISCOLORATION | DISCOLORATION INDEX |
| SLIGHTLY DISCOLORED ↕ DEEPLY DISCOLORED | 1 |
| | 2 |
| | 3 |
| | 4 |

■ : Cu−Zn−BASED ALLOYS
● : Cu−Mn−BASED ALLOYS

TARGET VALUE

0    10    20    30    40

COMPOSITION RATIO "P" OF READILY OXIDIZABLE ELEMENT (%)

# FIG. 4

SULFIDE LAYER

S

Ni

Cu

C    O

CONCENTRATION OF COMPONENT ELEMENTS

0    2000    4000    6000    8000

DEPTH FROM SURFACE (nm)

# FIG. 5

WEIGHT%

TEMPERATURE (℃)

1500
1400
1300
1200
1100

LIQUIDUS CURVE

SOLIDUS CURVE

1453

1083

0  10  20  30  40  50  60  70  80  90  100

Cu                                    Ni

ATOMIC%

# FIG. 6

PRESSURE AT SEIZURE (MPa)

20
16
12
10
8
6
4
0

0   30  50  70   100

CONTENT OF Ni (WEIGHT%)

# FIG. 7

MELTING POINT AND CORROSION
RESISTANCE OF Cu-Ni-Zn-BASED
TERNARY ALLOY

○ : NO CORROSION
■ : CORRODED
▨ : AREA WHERE TERNARY
ALLOY COULD BE SINTERED
SIMULTANEOUSLY WITH Fe-BASED
SUBSTRATE AND COULD INHIBIT CORROSION

# FIG. 8

MELTING POINT AND CORROSION
RESISTANCE OF Cu-Ni-Mn-BASED
TERNARY ALLOY

○: NO CORROSION
■: CORRODED
▨: AREA WHERE TERNARY
ALLOY COULD BE SINTERED
SIMULTANEOUSLY WITH Fe-BASED
SUBSTRATE AND COULD INHIBIT CORROSION

EP 0 872 565 A1

| | European Patent Office | EUROPEAN SEARCH REPORT | Application Number EP 98 10 6836 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 709 476 A (SUMITOMO ELECTRIC INDUSTRIES) 1 May 1996 * page 6, line 36 - line 50; tables 2,3 * --- | 1-12 | C22C9/06 C22C19/03 C22C30/00 F16D23/04 F16D69/02 |
| X | EP 0 743 117 A (TOYOTA MOTOR CO LTD) 20 November 1996 * column 18, line 50 - line 55 * --- | 1-12 | |
| X | WO 96 27685 A (TAIHO KOGYO CO LTD ;TOMIKAWA TAKASHI (JP); KIRA TOSHIHIKO (JP); KA) 12 September 1996 * page 14; table 1 * --- | 1-12 | |
| X A | DE 36 10 723 A (SCHUNK SINTERMETALLTECHNIK GMB) 1 October 1987 * claim 3 * --- | 1-10 11,12 | |
| X | EP 0 657 555 A (DIEHL GMBH & CO) 14 June 1995 * table 1 * ----- | 1-12 | |
| | | | TECHNICAL FIELDS SEARCHED (Int.Cl.6) C22C F16D |

The present search report has been drawn up for all claims

| Place of search MUNICH | Date of completion of the search 5 August 1998 | Examiner Badcock, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)